# EUROPÄISCHE PATENTSCHRIFT

(11) **EP 2 210 329 B1**
(45) Veröffentlichungstag und Bekanntmachung des Hinweises auf die Patenterteilung: **04.05.2016**
(21) Anmeldenummer: 08839464.8
(22) Anmeldetag: 15.10.2008
(51) Int. Cl.: H02K 1/14, H02K 5/04

(54) **ROTOR ODER STATOR FÜR EINE ELEKTRODYNAMISCHE MASCHINE**
ROTOR OR STATOR FOR AN ELECTRODYNAMIC MACHINE
ROTOR OU STATOR POUR UNE MACHINE ÉLECTRODYNAMIQUE

(30) Priorität: 15.10.2007 DE 102007049596
(43) Veröffentlichungstag der Anmeldung: 28.07.2010
(73) Patentinhaber: Meier, Hans, 75179 Pforzheim (DE)
(72) Erfinder: ISERT, Hugo, 36466 Dermbach (DE); SCHEICH, Hubert, 36132 Eiterfeld (DE); MEIER, Hans, 75179 Pforzheim (DE)
(74) Vertreter: Patentanwälte Olbricht Buchhold Keulertz
(86) Internationale Anmeldenummer: PCT/EP2008/008700
(87) Internationale Veröffentlichungsnummer: WO 2009/049864

(56) Entgegenhaltungen:
- EP-A- 1 760 861
- US-A- 4 465 946
- US-A- 5 767 602
- US-A1- 2002 047 425
- US-A1- 2004 217 669
- US-A1- 2006 232 143

## Beschreibung

Die vorliegende Erfindung bezieht sich auf einen Rotor oder Stator für eine elektrodynamische Maschine, insbesondere für einen Torquemotor, wobei der Rotor oder Stator eine Vielzahl von gestapelten teilringförmigen Plattensegmenten aufweist, die gemeinsam einen Plattensegmentring bilden, in dem Spulenanordnungen positioniert werden können. Ferner betrifft die vorliegende Erfindung ein Verfahren zur Herstellung eines solchen Rotors oder Stators sowie eine elektrodynamische Maschine mit einem derartigen Rotor oder Stator.

Statoren und Rotoren, die aus einer Vielzahl von Plattensegmenten mit darin aufgenommenen Spulenanordnungen bestehen, sind im Stand der Technik bekannt. Der Einfachheit halber wird nachfolgend nur noch auf Statoren Bezug genommen, wobei jedoch klar sein sollte, dass die Ausführungen auch auf Rotoren übertragbar sind.

Bei der Herstellung von Statoren wird der Stator gewöhnlich aus einer Vielzahl von teilringförmigen Plattensegmenten montiert. Die teilringförmigen Plattensegmente werden dabei aus Blechen ausgestanzt und anschließend zu einer Ringform zusammengesetzt und gestapelt. Die Plattensegmente werden hierbei versetzt zueinander angeordnet, um den insgesamt labilen Aufbau der gestapelten Plattensegmente zu stabilisieren. In den einzelnen Plattensegmenten sind Durchgangslöcher ausgebildet, die bei der Montage auf Positionierstifte aufgeschoben werden, um eine vorbestimmte Positionierung und Ausrichtung der Plattensegmente zu erzielen.

Nach Fertigstellung des aus den Plattensegmenten zusammengesetzten Rings werden auf Vorsprünge, die am Innenumfang der Plattensegmente ausgebildet sind, Spulenanordnungen aufgebracht, wobei die Spulen entweder unter Verwendung spezieller Wickelmaschinen oder von Hand gewickelt werden. Daraufhin wird auf den Außenumfang der Plattenelemente ein hohlzylindrisches bzw. ringförmiges Gehäuse aufgeschoben. Schließlich wird die gesamte Anordnung meist noch mit einem Kunststoffmaterial vergossen, um die für die spätere Anwendung erforderliche Zielstabilität zu erzielen. Zum Vergießen der Anordnung wird diese auf einen Dorn aufgeschoben, der die Anordnung zentriert und als innere Schalung dient. Das Gehäuse wird als äußere Schale verwendet.

Ein wesentlicher Nachteil dieser Herstellungsvariante besteht darin, dass die Baugrößenminimierung des Stators bei einem vorgegebenen Drehmoment, das die fertige elektrodynamische Maschine erzielen soll, Grenzen aufweist. Das gleiche gilt für die Drehmomenterhöhung bei vorgegebener Baugröße des Stators. Dies ist teilweise darauf zurückzuführen, dass für das Wickeln der Spulenanordnungen ausreichend Platz in dem durch die montierten Plattensegmente definierten Innenraum des Stators zur Verfügung stehen muss. Zudem ist aufgrund des Wickelns bei bereits montiertem Plattensegmentring nur ein geringer Füllgrad erzielbar, der normalerweise in einem Bereich zwischen 35 bis 40% liegt. Natürlich könnten ebenso vorgewickelte Spulenanordnungen verwendet werden, die dann nachträglich in den durch die montierten Plattensegmente definierten Innenraum eingesetzt werden. Hierdurch wird jedoch die Baugröße des Stators negativ beeinträchtigt, da für das nachträgliche Einsetzen der Spulenanordnungen mehr Platz als für das Wickeln benötigt wird.

Ein weiteres Problem bei der zuvor beschriebenen Herstellung von Statoren besteht darin, dass beim Gießprozess zwischen dem Außenumfang der in Ringform gestapelten Plattensegmente und dem Innendurchmesser eines auf diese aufgeschobenen Gehäuses, soweit ein solches vorhanden ist, Spalte verbleiben, die sich während des Gießvorgangs mit Kunststoffmaterial füllen. Entsprechend besteht zwischen den Plattensegmenten und dem Gehäuse an vielen Stellen kein unmittelbarer Kontakt, so dass der Wärmeübergang von den Plattensegmenten zum Stator entsprechend schlecht ist. Somit kann es bei späteren Anwendungen des Stators zur Überhitzung der elektrischen Maschine aufgrund einer mangelnden Wärmeabfuhr kommen.

Aus US 2002/ 047 425 A1 ist eine Ausbildung eines Stators bekannt, bei welchem mehrere identische Sektoren radial aneinander gesetzt sind. Zwei benachbarte Sektoren bilden jeweils einen nach innen weisenden Zahn. Auf diesen Zahn ist eine Spule aufgesetzt, womit benachbarte Sektoren in Umfangsrichtung relativ zueinander gehalten werden. Für eine Halterung in radialer Richtung hat jeder Sektor eine Nut und eine Feder, sodass jeweils eine Feder eines Sektors in die Nut eines benachbarten Sektors eingreift.

In US 2004/217 669 A1 wird ein Stator beschrieben, welcher eine rohrförmige Hülse und eine Kette an Sektoren aufweist, wobei die Sektoren über Biegestellen aneinander fixiert sind. Die Biegestellen sind in der Abwicklung der Kette teilkreisförmig. Nachdem die Kette zu einem Kreis gebogen ist, sind die teilkreisförmigen Ausnehmungen weitestgehend geschlossen. Die gebogene Sektorkette wird dann in die Hülse eingeschoben. Um an der Hülse fixiert zu werden, ist vorgesehen an der Bindenaht der Sektorkette einen Spannstift einzuschieben, welcher den Durchmesser der Sektorkette weitet, sodass diese gegen die Innenwandung der Hülse verspannt ist.

Nach US 4 465 946 A werden mehrere teilkreisförmige Sektoren eines Stators miteinander verschweißt. Ferner ist aus US 2006/232 143 A1 bekannt, einen Stator mit elektrischen Leitungen in einer Isolationsmasse einzugießen.

Ausgehend von diesem Stand der Technik ist es eine Aufgabe der vorliegenden Erfindung, einen Stator oder Rotor für eine elektrodynamische Maschine mit alternativem Aufbau, ein alternatives Verfahren zum Herstellen eines solchen Stators oder Rotors sowie eine elektrodynamische Maschine mit einem derartigen Stator oder Rotor zu schaffen, bei denen die genannten Nachteile zumindest teilweise behoben werden.

Diese Aufgabe wird gemäß der vorliegenden Erfindung durch einen Stator oder Rotor nach Anspruch 1, durch ein Verfahren zum Herstellen eines Stators oder Rotors nach Anspruch 10 und durch eine elektrodynamische Maschine nach Anspruch 14 gelöst. Die abhängigen Ansprüche beziehen sich auf individuelle Ausgestaltungen der vorliegenden Erfindung.

Der Stator oder Rotor für eine elektrodynamische Maschine gemäß der vorliegenden Erfindung umfasst eine Vielzahl von gestapelten teilringförmigen Plattensegmenten, wobei die Plattensegmente derart gestapelt sind, dass mehrere teilringförmige Plattensegmentblöcke gebildet werden, die zusammengesetzt den Stator oder Rotor bilden. Erfindungsgemäß ist der Stator oder Rotor dadurch gekennzeichnet, dass die Plattensegmente Verbindungsabschnitte aufweisen, die derart ausgebildet sind, dass sie aneinander fixierbar sind und dass sie die teilringförmigen Plattensegmentblöcke bei ihrer Montage kraft- und/oder formschlüssig miteinander verbinden, und dadurch, dass die Verbindungsabschnitte derart ausgebildet sind, dass sie unter Verkleinerung eines Durchmessers und/oder einer Außenabmessung der miteinander verbundenen Plattensegmentblöcke aneinander fixierbar sind, wobei die Verbindungsabschnitte derart ausgebildet sind, dass sie unter Verringerung des Durchmessers und/oder der Außenabmessung der miteinander verbundenen Plattensegmentblöcke einen Spannstift zwischen sich aufnehmen.

Im Gegensatz zu dem eingangs beschriebenen Stand der Technik werden die Plattensegmente entsprechend nicht versetzt zueinander gestapelt, um den Stator oder Rotor auszubilden, sondern sie werden im wesentlichen fluchtend miteinander gestapelt, um teilringförmige Plattensegmentblöcke zu erzeugen. Hierzu weisen die teilringförmigen Plattensegmente bevorzugt zumindest ein Durchgangsloch zur Aufnahme eines Nietstiftes auf, der die Plattensegmente bei der Herstellung der teilringförmigen Plattensegmentblöcke positioniert und/oder miteinander verbindet. Vorteilhaft sind mehrere Durchgangslöcher zur Aufnahme einer Mehrzahl von Nietstiften vorgesehen, so dass den Plattensegmenten beim Stapeln zudem eine vorbestimmte Ausrichtung verliehen wird. Einige der Durchgangslöcher können auch zur Aufnahme von selbstschneidenden Schrauben verwendet werden, um beispielsweise Gehäuseteile des Motors am Segmentblockring zu befestigen.

Der wesentliche Vorteil, der durch die Bildung von Plattensegmentblöcken erzielt wird, besteht darin, dass die Plattensegmentblöcke mit Spulenanordnungen bestückt werden können, bevor die Plattensegmentblöcke zu einer Ringform zusammengesetzt werden. Entsprechend ist ein nachträgliches Wickeln oder Anordnen der Spulenanordnungen nicht länger erforderlich, weshalb der hierfür erforderliche Platz nicht vorgesehen werden muss. Somit kann ein wesentlich besserer Füllgrad erzielt werden, der 70% weit überschreiten kann. Entsprechend kann verglichen mit dem Stand der Technik eine dynamoelektrische Maschine erzielt werden, die bei gleicher Baugröße ein größeres Drehmoment liefert, oder die bei geringerer Baugröße ein mit dem Stand der Technik vergleichbares Drehmoment liefert. Es kann also wahlweise die Leistung oder die Baugröße der elektrodynamischen Maschine optimiert werden, wobei natürlich auch eine Kombination aus verbesserter Leistung und verbesserter Baugröße möglich ist.

Die Plattensegmente sind bevorzugt derart ausgebildet, dass nach der Montage eines Plattensegmentblockes zumindest eine Spulenanordnung an dem Plattensegmentblock befestigbar ist, wobei natürlich auch mehrere Spulenanordnungen an einem Plattensegmentblock vorgesehen werden können. Hierzu weisen die Plattensegmente vorteilhaft zumindest einen Vorsprung auf, an dem eine Spulenanordnung befestigbar ist, wobei der zumindest eine Vorsprung derart ausgebildet ist, dass die Spulenanordnung darauf aufsteckbar oder aufschiebbar ist. Dadurch wird eine ebenso einfache wie rasche Montage gewährleist. Die Spulenanordnungen können alternativ auf den wenigstens einen Vorsprung jedes Plattensegmentblockes gewickelt werden. Bevorzugt handelt es sich bei den Spulenanordnungen jedoch um vorgefertigte Bauteile.

Vorteilhaft umfasst der Stator oder Rotor zumindest ein Halteelement zum Halten der Spulenanordnung an einem Plattensegmentblock. Hierbei kann es sich beispielsweise um ein plattenförmiges Element handeln, dass beispielsweise in an einem Plattensegmentblock ausgebildeten Aufnahmenuten einsetzbar ist, nachdem die entsprechende Spulenanordnung an dem Plattensegmentblock positioniert wurde.

Die Spulenanordnungen werden nach ihrer Montage vorteilhaft miteinander verlötet oder gecrimpt, um diese elektrisch miteinander zu verbinden. Ein Verlöten oder Crimpen der Spulenanordnungen ist dahingehend vorteilhaft, dass der Lack ,der an den Leitern der Spulenanordnung beispielsweise in Form einer Emaillebeschichtung vorgesehen ist, nicht in einem gesonderten Schritt entfernt werden muss, da das Entfernen des entsprechenden Lackbereiches automatisch während des Lötens bzw. Crimpens stattfindet.

Um die Plattensegmentblöcke einfach zusammensetzen zu können, weisen die teilringförmigen Plattensegmente die Verbindungsabschnitte auf, die derart ausgebildet sind, dass sie aneinander fixierbar sind und dass sie die teilringförmigen Plattensegmentblöcke bei ihrer Montage kraft- und/oder formschlüssig miteinander verbinden. Vorteilhaft können die Verbindungsabschnitte dabei derart ausgebildet sein, dass sie hakenartig oder spannringartig ineinander greifen und entsprechend aneinander befestigbar sind. Die Plattensegmentblöcke können mithin spannringartig zusammengesetzt und gegeneinander verspannt werden. Durch dieses Verspannen werden die Segmentblöcke fest und präzise miteinander verbunden. Zusätzliche Befestigungs- oder Haltemittel sind nicht erforderlich. Eine Nachbearbeitung der entstehenden Rotor- oder Statoreinheiten ist nicht notwendig.

Gemäß der vorliegenden Erfindung sind die Verbindungsabschnitte derart ausgebildet, dass sie unter Verkleinerung eines Durchmessers oder einer Außenabmessung der miteinander verbundenen Plattensegmentblöcke aneinander fixierbar sind. Hierzu sind die Verbindungsabschnitte derart ausgebildet, dass sie unter Verringerung des Innendurchmessers der miteinander verbundenen Plattensegmentblöcke einen Spannstift zwischen sich aufnehmen. Verändern kann sich aber auch der Außendurchmesser oder bei einer unrunden Außenkontur, die Außenabmessung. Bei einer solchen Ausgestaltung können die Verbindungsabschnitte zunächst verhältnismäßig lose miteinander in Eingriff gebracht werden, wobei die Endpositionierung und Endausrichtung durch die Verkleinerung des Durchmessers bzw. der Außenabmessung der miteinander verbundenen Plattensegmentblöcke erfolgt, also beim Einsetzen der Spannstifte.

Zudem können die Plattensegmente bevorzugt derart ausgebildet sein, dass sie im zusammengesetzten Zustand Kühlkanäle ausbilden, durch die während des Betriebs der elektrodynamischen Maschine ein Kühlmedium strömen kann.

Gemäß einer Ausgestaltung der vorliegenden Erfindung umfasst der Stator oder Rotor ferner ein ringförmiges Gehäuse, das an den Plattensegmentblöcken festlegbar ist. Vorteilhaft ist das Gehäuse derart ausgebildet, dass sein Innendurchmesser bei der Montage des Stators oder Rotors derart veränderbar ist, dass das Gehäuse um die montierten Plattensegmentblöcke positionierbar und radial gegen diese verspannbar ist. Mit anderen Worten kann der Innendurchmesser des Gehäuses zumindest zwischen zwei Positionen bewegt werden. In der ersten Position ist der Innendurchmesser des Gehäuses größer als der Außendurchmesser der zusammengesetzten Plattensegmentblöcke, sodass das Gehäuse bequem über den Außendurchmesser der montierten Plattensegmentblöcke geschoben und um diesen angeordnet werden kann. Das Spiel zwischen dem Innendurchmesser des Gehäuses in seiner ersten Position und dem Außendurchmesser der montierten Plattensegmentblöcke, das hierfür erforderlich ist, hängt von der Größe des ringförmigen Stators oder Rotors und von der Montagegenauigkeit der Plattensegmente ab und kann beispielsweise im Bereich vom 1 bis 3 mm liegen. Nachdem das Gehäuse auf die montierten Plattensegmentblöcke geschoben wurde, kann nunmehr der Innendurchmesser des Gehäuses in seine zweite Position überführt werden, indem das Gehäuse radial gegen die Plattensegmente verspannt wird, so dass in der zweiten Position kein Spiel zwischen dem Innendurchmesser des Gehäuses und dem Außendurchmesser der montierten Plattensegmentblöcke verbleibt. Auf diese Weise kann ein ordnungsgemäßer Kontakt zwischen den Plattensegmenten der Plattensegmentblöcke und dem Gehäuse sichergestellt werden, wodurch ein exzellenter Wärmeübergang von den Plattensegmenten auf das Gehäuse gewährleistet ist.

In einer alternativen Ausführungsform, beispielsweise bei einem Außenläufer-Motor kann man das Gehäuse auch innen in den Statorring einsetzen und durch Einführen von Spannstiften gegen den Statorring verspannen.

Das Gehäuse ist mithin bevorzugt spannringartig ausgebildet. Es besteht ferner aus mehreren Gehäusesegmenten, die jeweils einen Teilring bilden. Zum Verbinden der Gehäusesegmente sind bevorzugt Verbindungselemente vorgesehen, die unter Verkleinerung oder Vergrößerung des Innendurchmessers des Gehäuses relativ zueinander fixierbar sind. Hierzu sind die Verbindungselemente bevorzugt einteilig mit dem Gehäusesegmenten ausgebildet, wobei die Verbindungselemente gemäß einer Ausführungsvariante vorteilhaft derart ausgestaltet sind, dass sie im bestimmungsgemäßen Zustand hakenartig ineinander greifen und zur Fixierung ihrer Position relativ zueinander unter Verringerung des Innendurchmessers des Gehäuses einen Spannstift zwischen sich aufnehmen, was anhand des nachfolgend beschriebenen zweiten Ausführungsbeispiels noch näher erläutert wird. Ein weiteres Ausführungsbeispiel sieht vor, dass der Innendurchmesser des Gehäuses beim Einführen der Spannstifte vergrößert wird, so dass die Gehäusesegmente von innen an dem Statorring festgelegt werden.

Um ein Verdrehen des um die montierten Plattensegmente des Stators oder Rotors positionierten Gehäuses relativ zu den Plattensegmenten während des Verspannens des Gehäuses und des darauf folgenden Gießvorganges zu verhindern, ist bevorzugt zumindest eine Verdrehsicherung vorgesehen. Diese kann beispielsweise durch an dem Innenumfang des Gehäuses und an dem Außenumfang der Plattensegmentblöcke vorgesehene Vorsprünge und Aussparungen realisiert werden, die im montierten Zustand ineinander greifen.

Zur Kühlung des Stators oder Rotors ist in dem Gehäuse bevorzugt wenigstens ein Kühlkanal ausgebildet, durch den ein Kühlmedium strömen kann.

Hinsichtlich des Gewichtes und der Wärmeleitfähigkeit ist das Gehäuse bevorzugt aus Aluminium hergestellt.

Zudem bezieht sich die vorliegende Erfindung auf ein Verfahren zum Herstellen eines Stators oder Rotors der beschriebenen Art. Bei diesem Verfahren werden die Plattensegmente zunächst bevorzugt zu teilringförmigen Plattensegmentblöcken zusammengesetzt, woraufhin Spulenanordnungen an den Plattensegmentblöcken montiert werden. Anschließend erfolgt das Zusammensetzten der die Spulenanordnungen aufweisenden teilringförmigen Plattensegmentblöcke.

Wenn der Stator oder Rotor ein Gehäuse aufweist, so wird dieses nach dem Zusammensetzten der die Spulenanordnungen aufweisenden teilringförmigen Plattensegmentblöcke um die zusammengesetzten Plattensegmentblöcke positioniert und gegen die Plattensegmentblöcke verspannt.

Das Zusammensetzten der Plattensegmentblöcke erfolgt bevorzugt unter Verwendung eines Doms, der die Plattensegmentblöcke zentriert, so dass sich das Gehäuse einfacher auf den Außenumfang der Plattensegmente aufschieben lässt. Um der gesamten Anordnung die für die spätere Anwendung erforderliche Stabilität zu verleihen, werden die Plattensegmente bevorzugt in Kunststoff eingebettet. Bei dem zum Einbetten der Plattensegmente in Kunststoff erforderlichen Gießvorgang wird/werden das Gehäuse und/oder der Dorn vorteilhaft als Schalungen einer Gießform verwendet.

Schließlich bezieht sich die folgende Erfindung auf eine dynamoelektrische Maschine mit einem Stator oder Rotor der zuvor beschriebenen Art.

Nachfolgend werden Ausführungsformen der vorliegenden Erfindung unter Bezugnahme auf die beiliegenden Zeichnungen genauer beschrieben, wobei
- Fig. 1: eine Draufsicht eines Plattensegmentes eines Stators gemäß einer ersten Ausführungsform der vorliegenden Erfindung ist;
- Fig. 2: eine perspektivische Ansicht eines Plattensegmentblockes ist, der aus einer Vielzahl der in Fig. 1 dargestellten Plattensegmente zusammengesetzt ist;
- Fig. 3: eine perspektivische Ansicht des in Fig. 2 dargestellten Plattensegmentblockes mit eingesetzten Spulenanordnungen ist;
- Fig. 4: eine perspektivische Ansicht eines aus den in Fig. 3 dargestellten Plattensegmentblöcken mit montierten Spulenanordnungen zusammengesetzten Statorrings ist;
- Fig. 5: eine perspektivische Ansicht des in Fig. 4 dargestellten Statorrings mit eingesetztem Rotor ist;
- Fig. 6: eine Draufsicht des in Fig. 5 dargestellten Statorrings ist;
- Fig. 7: eine vergrößerte Ansicht des in Fig. 6 mit V bezeichneten Bereiches ist, welche die Befestigung einer Spulenanordnung in einem Plattensegmentblock zeigt;
- Fig. 8: eine perspektivische Explosionsansicht eines Torquemotors ist, der die in Fig. 5 dargestellten Anordnung aufweist;
- Fig. 9: eine Querschnittansicht des in Fig. 8 dargestellten Torquemotors im zusammengesetzten Zustand ist;
- Fig. 10: eine Draufsicht eines Plattensegmentes eines Stators gemäß einer Ausführungsform die nicht Teil der Erfindung ist;
- Fig. 11: eine perspektivische Ansicht eines Plattensegmentblockes ist, der aus einer Vielzahl der in Fig. 10 dargestellten Plattensegmente zusammengesetzt ist;
- Fig. 12: eine perspektivische Ansicht des in Fig. 11 dargestellten Plattensegmentblockes mit eingesetzten Spulenanordnungen ist;
- Fig. 13: eine perspektivische Ansicht eines Gehäusesegmentes eines Gehäuses gemäß einer Ausführungsform der vorliegenden Erfindung ist;
- Fig. 14: eine perspektivische Ansicht des in Fig. 13 dargestellten Statorrings ist, um den ein Gehäuse angeordnet ist, das aus den in Fig. 14 dargestellten Gehäusesegmenten zusammengesetzt ist;
- Fig. 15: eine Draufsicht der in Fig. 15 dargestellten Anordnung ist;
- Fig. 16: eine perspektivische Ansicht ist, welche die in den Fig. 15 und 16 dargestellte Anordnung im verspannten Zustand zeigt;
- Fig. 17: eine Draufsicht der verspannten Anordnung gemäß Fig. 17 zeigt.
- Fig. 18: eine Draufsicht eines Plattensegmentes eines Stators gemäß einer weiteren Ausführungsform der vorliegenden Erfindung ist;
- Fig. 19: eine perspektivische Ansicht eines Gehäusesegmentes eines Gehäuses gemäß einer weiteren Ausführungsform der vorliegenden Erfindung ist;
- Fig. 20: eine Draufsicht auf einen Statorring, in den ein Gehäuse eingesetzt ist, das aus den in Fig. 19 dargestellten Gehäusesegmenten zusammengesetzt ist; und
- Fig. 21: eine Draufsicht auf einen Torquemotor als Außenläufer.

Gleiche Bezugsziffern beziehen sich nachfolgend auf gleiche oder gleichartige Bauteile.

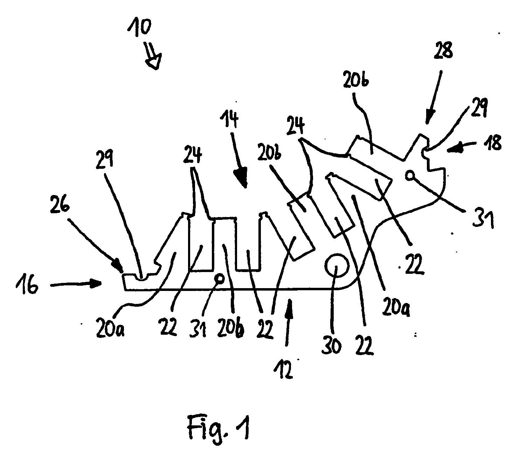

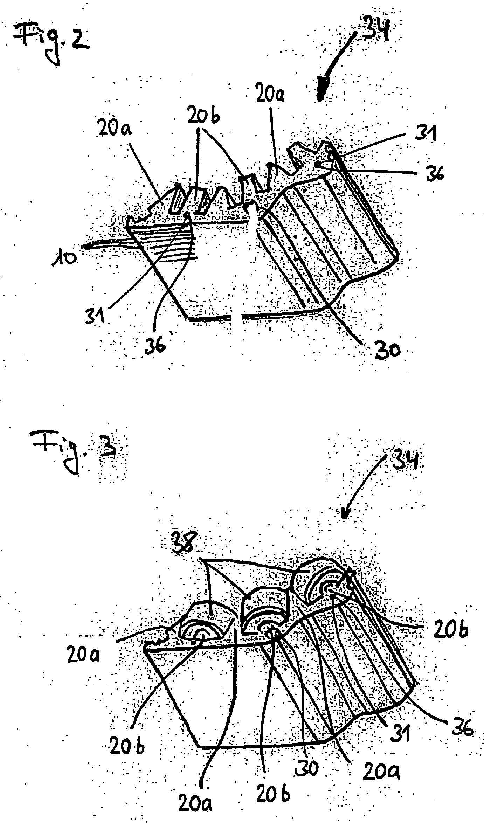

Fig. 1 zeigt eine Draufsicht eines Plattensegments 10 eines Stators für einen Innenläufer-Motor 48 gemäß einer ersten Ausführungsform der vorliegenden Erfindung. Bei dem Plattensegment 10 handelt es sich um ein ausgestanztes Blechteil mit einer Außenseite 12, einer Innenseite 14 und zwei einander gegenüberliegenden Stirnseiten 16 und 18, die gemeinsam eine teilringartige Form ausbilden. Die Innenseite 14 umfasst im Wesentlichen keilförmige Vorsprünge 20a und im Wesentlichen rechteckige Vorsprünge 20b, die abwechselnd nebeneinander angeordnet sind. Zwischen Vorsprüngen 20a und 20b ist jeweils eine im Wesentlichen rechteckige Aussparung 22 vorgesehen, welche die Vorsprünge 20a und 20b voneinander trennt. Jeweils ein Vorsprung 20b dient mit den beiden benachbarten Aussparungen 22 zur Aufnahme einer Spulenanordnung, wie es unter Bezugnahme auf Fig. 3 noch näher erläutert wird.

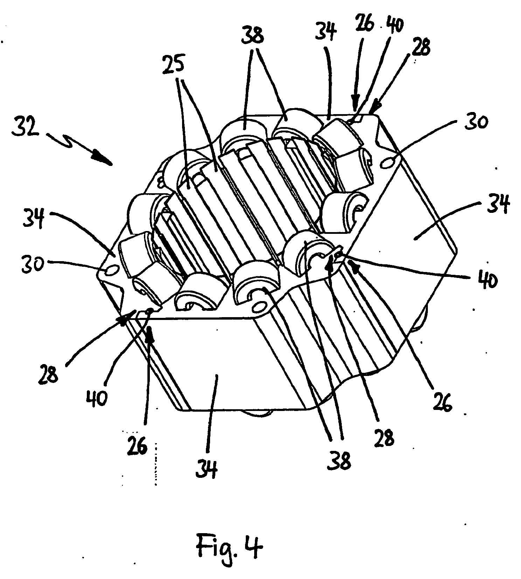

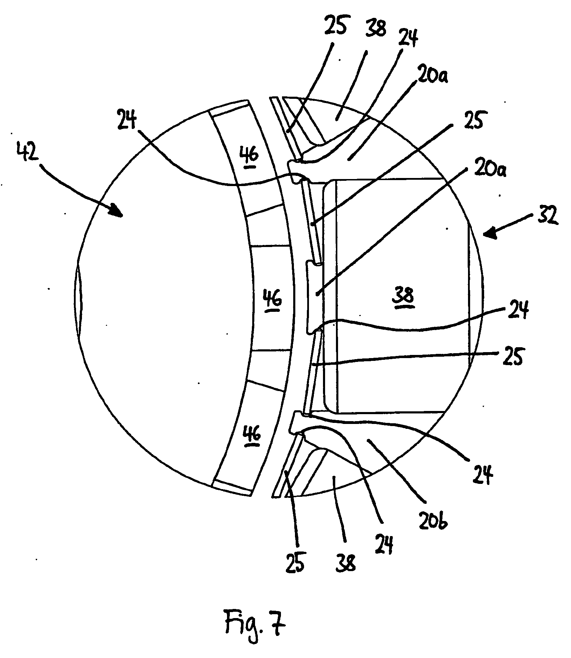

In der Nähe der zur Innenseite 14 weisenden Enden jedes Vorsprungs 20a, 20b sind Kerben 24 ausgebildet, wobei jeweils eine Kerbe 24 eines Vorsprungs 20a einer gegenüberliegenden Kerbe 24 eines Vorsprungs 20b zugeordnet ist. Die einzelnen Kerben 24 bilden im montierten Zustand einer Vielzahl der in Fig. 1 dargestellten Plattensegmente 10 Nuten, in die (hier nicht gezeigte) Halteelemente 25 in Form länglicher Plattenelemente eingeschoben werden können (siehe z.B. Fig. 4). Diese Plattenelemente 25 dienen zur Sicherung von Spulenanordnungen 38, die auf die Vorsprünge 20b der Plattensegmentblöcke 34 aufgesetzt werden, wie es genauer unter Bezugnahme auf Fig. 7 beschrieben wird.

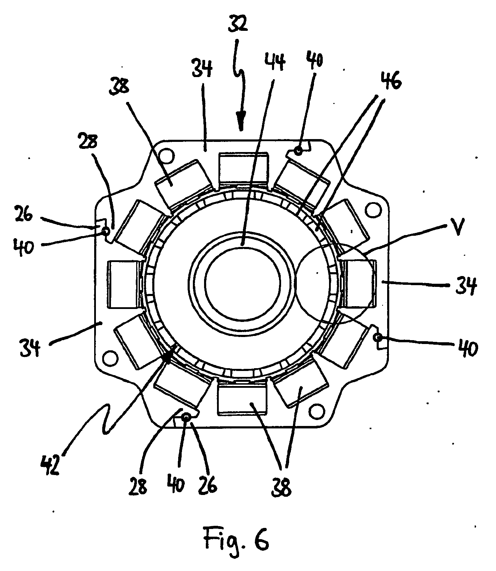

An der Stirnseite 16 des Plattensegments 10 ist ein haken- oder L-förmiger Verbindungsabschnitt 26 ausgebildet, während an der Stirnseite 18 ein dazu komplementärer Verbindungsabschnitt 28 vorhanden ist. Die Verbindungsabschnitte 26, 28 dienen dazu, zwei benachbarte Plattensegmente 10 kraft- und formschlüssig miteinander zu verbinden und relativ zueinander auszurichten, wenn mehrere Plattensegmente 10 zur Bildung eines Plattensegmentrings nebeneinander angeordnet werden. Dabei bilden die Verbindungsabschnitte 26, 28 zweier benachbarter Plattensegmente 10 - wie in den Fig. 4 und 6 zu sehen - gemeinsam eine Durchgangsöffnung 29 zur Aufnahme eines (hier nicht gezeigten) Spannstiftes 40, wie es unter Bezugnahme auf Fig. 4 noch genauer erläutert wird. Schließlich umfasst jedes Plattensegment 10 ein Durchgangsloch 30 zur Aufnahme (hier nicht gezeigter) Schraubbolzen 54 sowie wenigstens zwei weitere Durchgangslöcher 31 zur Aufnahme von (ebenfalls nicht sichtbaren) Nietstiften 36.

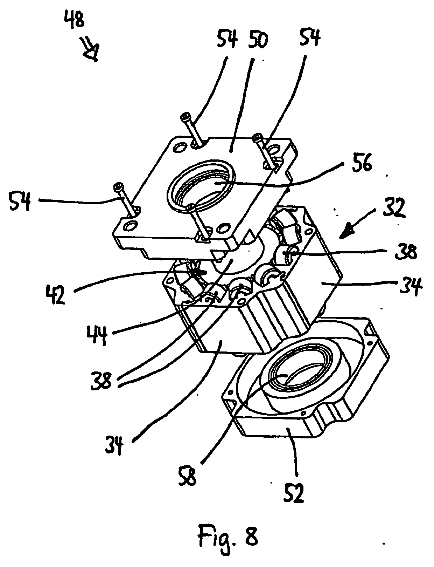

Fig. 2 ist eine perspektivische Ansicht eines Plattesegmentblockes 34. Der Plattensegmentblock 34 wird hergestellt, indem mehrere der in Fig. 1 dargestellten Plattensegmente 10 fluchtend übereinander positioniert werden. Dabei werden die kreisrunden Durchgangslöcher 30 der Plattensegmente 10 zunächst auf (nicht dargestellte) Positionierstifte geschoben, um die Plattensegmente 10 präzise zueinander ausrichten zu können. In die weiteren Durchgangslöcher 31 werden Nietstifte 36 eingesetzt und darin verpresst. Diese dienen dazu, die Plattensegmente 10 fest miteinander zu verbinden. Sobald die Plattensegmente 10 fest miteinander verbunden sind, werden die Positionierstifte entfernt. Die dadurch frei werdenden Durchgangslöcher 30 nehmen bei der Montage des Motors 48 Schraubbolzen 54 auf, um - wie später anhand von Fig. 8 noch näher erläutert wird - ein oberes und unteres Deckteil 50 festzulegen.

Fig. 3 ist eine perspektivische Ansicht des in Fig. 2 dargestellten Plattensegmentblockes 34 mit aufgeschobenen bzw. aufgesetzten Spulenanordnungen 38. Die vorgefertigten ringförmigen Spulenanordnungen 38 sind dabei jeweils auf die Vorsprünge 20b aufgesteckt, sodass sich die Spulenanordnungen 38 in den Aussparungen 22 erstrecken. Nach dem Aufschieben der Spulenanordnungen 38 werden (nicht gezeigte) Halteelemente 25 in Form von Plattenelementen in die Kerben eingeschoben, wie es genauer in Fig. 4 und 7 dargestellt ist, um ein Abrutschen der Spulenanordnungen 38 von den zugeordneten Vorsprüngen 20b zu verhindern.

Fig. 4 ist eine perspektivische Ansicht, die eine Stator-Anordnung zeigt, bei der vier der in Fig. 3 dargestellten Plattensegmentblöcke 34 zu einer Ringform zusammengesetzt sind. Alle vier Plattensegmentblöcke 34 bilden dabei einen geschlossenen Stator bzw. Statorring 32, wobei jeweils ein Verbindungsabschnitt 26 eines Plattensegmentblockes 34 in den Verbindungsabschnitt 28 eines benachbart angeordneten Plattensegmentblockes 34 eingreift. In die in den Verbindungsbereichen 26, 28 beim Zusammensetzen der Plattensegmentblöcke 34 entstehenden Durchgangsöffnungen 29 sind Spannstifte 40 eingesetzt, wodurch die Plattensegmentblöcke 34 gegeneinander verspannt und relativ zueinander ausgerichtet werden. Dazu sind die in den benachbarten Verbindungsabschnitten 26, 28 je zur Hälfte eingebrachten Durchgangsöffnungen 29 derart ausgebildet und relativ zueinander ausgerichtet, dass beim Einschieben der Spannstifte 40 jeweils benachbarte Plattensegmentblöcke 34 mit einer definierbaren Kraft gegeneinander gezogen werden, wobei sich die Verbindungsabschnitte 26, 28 jedes Plattensegments 10 formschlüssig ineinander fügen und die Außenseiten 12 bündig und nahezu nahtlos ineinander übergehen.

Die Spulenanordnungen 38 werden untereinander mittels Löten oder Crimpen verbunden. Löten oder Crimpen ist dahingehend vorteilhaft, dass die Lackschicht, die auf die Drähte der Spulenanordnungen 38 in Form von Emaillebeschichtungen oder dergleichen aufgetragen ist, nicht in einem gesonderten Schritt entfernt werden muss, da diese bei dem genannten Verfahren automatisch entfernt wird.

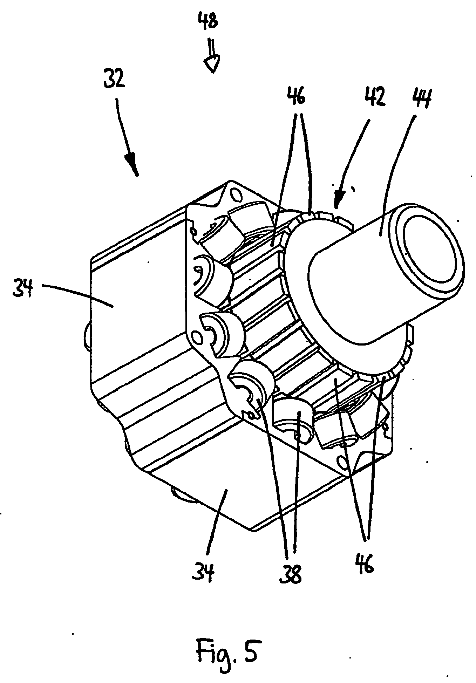

Fig. 5 ist eine perspektivische Ansicht der in Fig. 4 dargestellten Stator-Anordnung 32, in die ein Rotor 42 eingesetzt ist. Der Rotor 42 umfasst eine Hohlwelle 44, an deren Umfang Permanentmagnete 46 angeordnet sind, die mit den Spulenanordnungen 38 zusammenwirken. Die Permanentmagnete 46 sind entsprechend dem Innendurchmesser des Stators abgerundet, so dass sie optimal an diesen angepasst sind, wodurch der für die Aufnahme des Rotors 42 erforderliche Bauraum weiter reduziert werden kann. Das Verhältnis von Spulenanordnungen 38 zu Permanentmagneten 46 beträgt vorliegend 3:5, das heißt sechs Spulenanordnungen 38 stehen zehn Permanentmagneten 46 gegenüber, wie es besser in Fig. 6 zu erkennen ist, die eine Draufsicht der in Fig. 5 dargestellten Anordnung ist.

Fig. 7 ist eine vergrößerte Ansicht des in Fig. 6 mit V bezeichneten Bereiches. In dieser vergrößerten Ansicht ist besonders gut zu erkennen, wie die Spulenanordnungen 38 durch die in die Kerben 24 eingesetzten Halteelemente 25 gehalten sind.

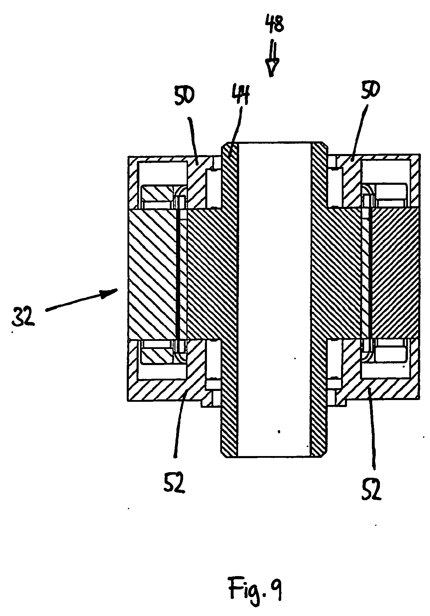

Fig. 8 zeigt eine perspektivische Explosionsansicht eines Torquemotors 48 mit einer Stator-Rotor-Anordnung 32, 42 wie sie in den Fig. 5 bis 7 dargestellt ist. Eine Schnittansicht des montierten Motors 48 ist in Fig. 9 zu sehen.

Der Stator 32 bildet mit seinen Plattensegmentblöcken 34 einen Teil des Motorgehäuses, während der Rotor 42 als Innenläufer ausgebildet ist. Oberhalb und unterhalb des Stators 32 ist jeweils ein oberes Deckelteil 50 und ein unteres Deckelteil 52 aufgesetzt, die mit Hilfe von Schraubbolzen 54 miteinander verbunden und an dem Stator 32 festgelegt werden. Die Schraubbolzen 54 werden hierzu in die Durchgangsöffnungen 30 der Plattensegmentblöcke 34 eingesetzt.

Das obere Deckelteil 50 und das untere Deckelteil 52 weisen jeweils eine mittige Durchgangsöffnung 56, 58 zur Aufnahme der Hohlwelle 42 auf. Der so erzeugte Torquemotor 48 weist einen minimalen Bauraum bei optimierter Leistung auf. Beispielsweise lässt sich gemäß der Erfindung ein Torquemotor mit einem Außendurchmesser von etwa 56 mm erzielen. Der minimale Außendurchmesser bekannter Torquemotoren hingegen lag bislang bei etwa 100 mm, wobei die Leistung vergleichbar ist.

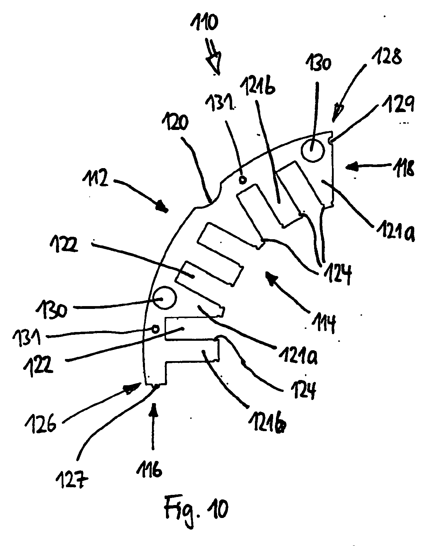

Fig. 10 zeigt eine Draufsicht eines Plattensegments 110 für einen Stator 132 gemäß einer Ausführungsform die nicht Teil der Erfindung ist.

Bei dem Plattensegment 110 handelt es sich um ein ausgestanztes Blechteil mit einer Außenseite 112, einer Innenseite 114 und zwei einander gegenüberliegenden Stirnseiten 116 und 118, die gemeinsam eine teilringartige Form ausbilden. Die Außenseite 112 weist die Form eines Teilkreisbogens auf, in dem eine bogenförmige Einbuchtung 120 eingebracht ist, die einen Teil einer Verdrehsicherung bildet, welche nachfolgend noch näher erläutert wird. Die Innenseite 114 ist ebenfalls im Wesentlichen teilkreisförmig ausgebildet und umfasst ebenso wie das Plattensegment 10 der ersten Ausführungsform eine Reihe von benachbart angeordneten Vorsprüngen 121a und 121b sowie zwischen diesen ausgebildete Aussparungen 122, wobei die Vorsprünge 121a und die den Vorsprüngen 121a jeweils benachbarten Aussparungen 122 zur Aufnahme von Spulenanordnungen 138 dienen, was bereits in Fig. 3 zur ersten Ausführungsform dargestellt ist.

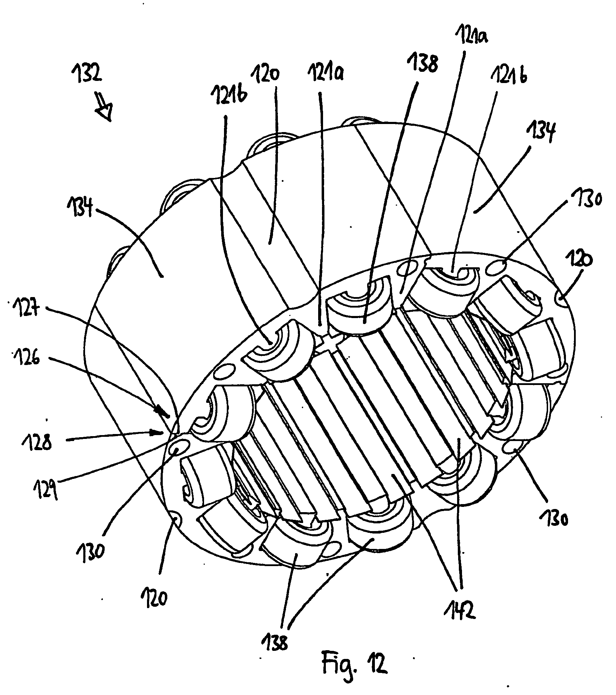

Nahe der Innenseite 114 umfasst jede der Aussparungen 122 einander gegenüberliegende Kerben 124, die im montierten Zustand einer Vielzahl der in Fig. 10 dargestellten Plattensegmente 110 Nuten bilden. In diese Nuten können (hier nicht gezeigte) Halteelemente 142 in Form von länglichen Plattenelementen eingeschoben werden, welche die Spulenanordnungen 138 im montierten Zustand in den Aussparungen 122 halten, was bereits in Fig. 4 und 7 zur ersten Ausführungsform gezeigt ist (siehe auch Fig. 12).

An der Stirnseite 116 des Plattensegments 110 ist ein im Wesentlichen L-förmiger Verbindungsabschnitt 126 ausgebildet, während an der gegenüberliegenden Stirnseite 118 ein zu dem Verbindungsabschnitt 126 komplementärer Verbindungsabschnitt 128 vorhanden ist. Die Verbindungsabschnitte 126, 128 dienen dazu, Plattensegmente 110 relativ zueinander auszurichten und zu positionieren, wenn mehrere Plattensegmente 110 zur Bildung eines Plattensegmentrings nebeneinander angeordnet werden. Der Verbindungsabschnitt 126 weist - wie Fig. 10 weiter zeigt - stirnseitig einen halbkreisförmigen Vorsprung 127 auf, während an der gegenüberliegenden Stirnseite 118 des Verbindungsabschnitts 128 eine dem halbkreisförmigen Vorsprung 127 entsprechende halbkreisförmige Öffnung 129 ausgebildet ist. Der Vorsprung 127 und die Öffnung 129 dienen dazu, insbesondere bei kleineren Motoren, benachbarte Plattensegmente 110 relativ zueinander auszurichten und zu positionieren, wenn mehrere Plattensegmentblöcke 134 zur Bildung eines Stator-Rings aneinander gelegt werden.

Das Plattensegment 110 umfasst eine oder - wie in Fig. 10 dargestellt - zwei kreisförmige Durchgangslöcher 130, die während der Montage der Plattensegmentblöcke 134 zur Aufnahme von (nicht dargestellten) Passstiften dienen. Dadurch werden die Plattensegmente 110 präzise und kongruent zueinander ausgerichtet. Jedes Plattensegment 110 hat ferner wenigstens zwei weitere Durchgangslöcher 131 zur Aufnahme von (ebenfalls nicht sichtbaren) Nietstiften 136. Diese dienen dazu, die Plattensegmente 110 fest miteinander zu verbinden. Sobald die Plattensegmente 110 fest miteinander verbunden sind, werden die Positionierstifte entfernt. Die dadurch frei werdenden Durchgangslöcher 130 nehmen bei der Montage des Motors (nicht gezeigte) Schraubbolzen auf, um weitere Gehäuse- oder Motorteile am Stator 132 befestigen zu können.

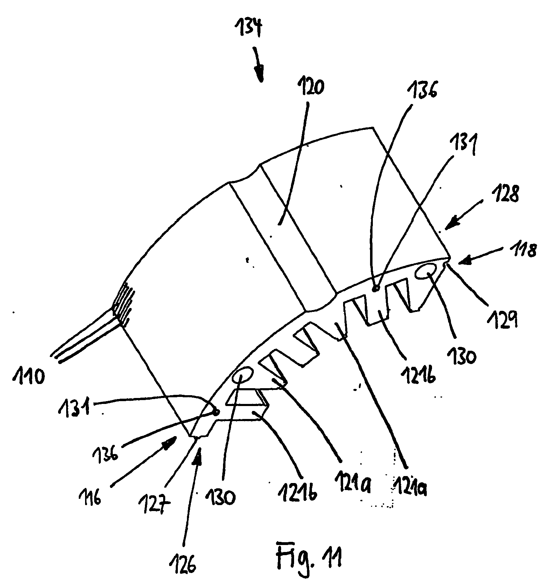

Fig. 11 ist eine perspektivische Ansicht eines Plattensegmentblocks 134. Dieser wird hergestellt, indem eine Vielzahl der in Fig. 10 dargestellten Plattensegmente 110 fluchtend übereinander angeordnet wird. Dabei werden die kreisrunden Durchgangslöcher 130 der Plattensegmente 110 zunächst auf (nicht dargestellte) Positionierstifte geschoben, um die Plattensegmente 110 präzise zueinander ausrichten zu können. In die weiteren Durchgangslöcher 131 werden Nietstifte 136 eingesetzt und darin verpresst. Dadurch werden die einzelnen Plattensegmente 110 fest miteinander verbunden. Sobald die Plattensegmente 110 einen festen Block 134 bilden, können die Positionierstifte aus den Löchern 130 entfernt werden.

Fig. 12 zeigt eine Stator-Anordnung, bei der vier der in Fig. 11 dargestellten Plattensegmentblöcke 134 zu einem geschlossenen Statorring 132 zusammengesetzt sind. Dabei greifen die Verbindungsabschnitte 126 eines Plattensegmentblockes 134 formschlüssig in den Verbindungsabschnitt 128 eines jeweils benachbart angeordneten Plattensegmentblocks 134, wobei die Vorsprünge 127 in den Öffnungen bzw. Ausnehmungen 129 für eine präzise Ausrichtung und eine hohe Stabilität sorgen.

Die vorgefertigten ringförmigen Spulenanordnungen 138 sind jeweils auf die Vorsprünge 121b der Plattensegmente 110 bzw. der Plattensegmentblöcke 134 aufgesteckt, so dass sich die Spulenanordnungen 138 in den Aussparungen 122 erstrecken. Nach dem Aufschieben der Spulenanordnungen 138 werden die Halteelemente 142 in Form von Plattenelementen in die Kerben der Vorsprünge 121a, 121b eingeschoben, um ein Abrutschen der Spulenanordnungen 138 von den Vorsprüngen 121b zu verhindern.

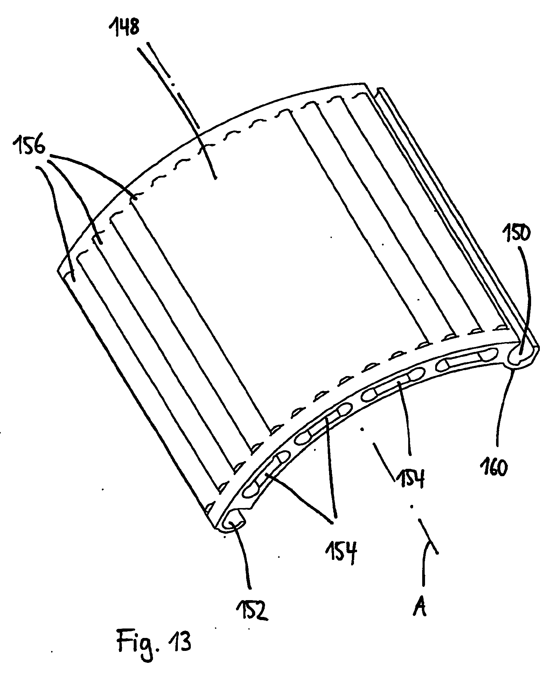

Fig. 13 ist eine perspektivische Ansicht eines Gehäusesegmentes 148, das zur Ausbildung eines Gehäuses 145 für den in Fig. 12 gezeigten Statorring 132 dient.

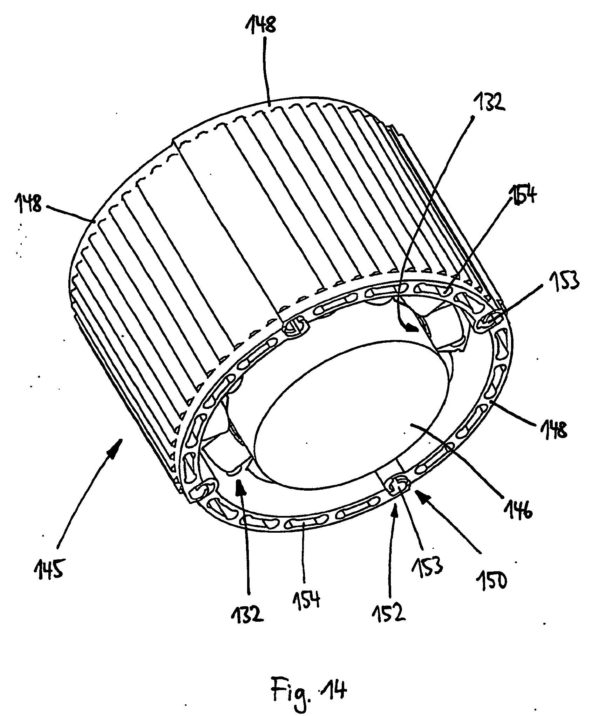

Das Gehäusesegment 148 weist einen im Wesentlichen teilringförmigen Aufbau auf, der derart beschaffen ist, dass ein ringförmiges Gehäuse 145 erzeugt wird, wenn - wie in Fig. 14 gezeigt - mehrere der in Fig. 13 dargestellten Gehäusesegmente 148 nebeneinander angeordnet und aneinander befestigt werden.

Zum Befestigen der Gehäusesegmente 148 untereinander umfasst jedes der Gehäusesegmente 148 Verbindungselemente 150 und 152, die derart ausgebildet sind, dass das Verbindungselement 150 eines Gehäusesegmentes 148 hakenartig in das Verbindungselement 152 eines benachbart angeordneten Gehäusesegmentes 148 greift, wobei zwischen den Verbindungselementen 150, 152 jeweils eine Durchgangsöffnung 153 gebildet wird.

In jedem Gehäusesegment 148 ist ferner eine Mehrzahl von Kühlkanälen 154 ausgebildet, die sich jeweils in axialer Richtung A des Gehäuses 145 erstrecken. Zudem sind an der Außenseite des Gehäusesegmentes 148 sich in axialer Richtung A erstreckende Erhebungen 156 vorgesehen, die zur Vergrößerung der Außenfläche des Gehäusesegmentes 148 und somit als Kühlrippen zur besseren Wärmeabfuhr dienen.

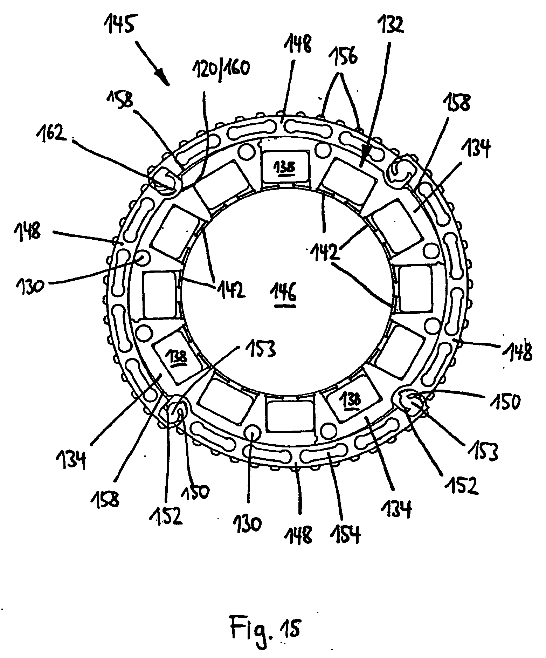

Die Fig. 14 und 15 zeigen eine Anordnung, bei der vier der in Fig. 14 dargestellten Gehäusesegmente 148 zu einem Ring zusammengesetzt und über die in Fig. 12 dargestellte Stator-Anordnung 132 geschoben sind. Wie insbesondere in Fig. 15 gut zu erkennen ist, greifen die hakenartigen Verbindungselemente 150 und 152 benachbart angeordneter Gehäusesegmente 148 derart locker ineinander, dass zwischen dem Außenumfang der Plattensegmentblöcke 134 und dem Innenumfang der Gehäusesegmente 148 ein gewisses Spiel in Form von Freiräumen 158 verbleibt, weshalb sich die zusammengesetzten Gehäusesegmente 148 in einfacher Art und Weise über die in Fig. 13 dargestellte Anordnung schieben lassen. Ferner wirken radial einwärts vorstehende Ausbuchtungen 160 der Verbindungselemente 150 mit den Einbuchtungen 120 der Plattensegmentblöcke 134 derart zusammen, dass eine Verdrehsicherung gebildet wird, die ein Verdrehen der Gehäusesegmente 148 relativ zu den Plattensegmentblöcken 134 verhindert. Gleichzeitig werden die Gehäusesegmente 148 gegenüber den Plattensegmentblöcken 134 ausgerichtet.

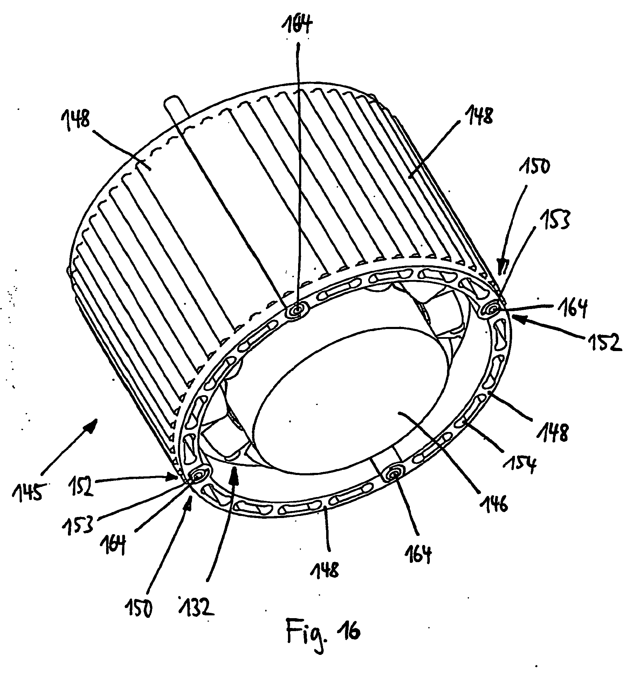

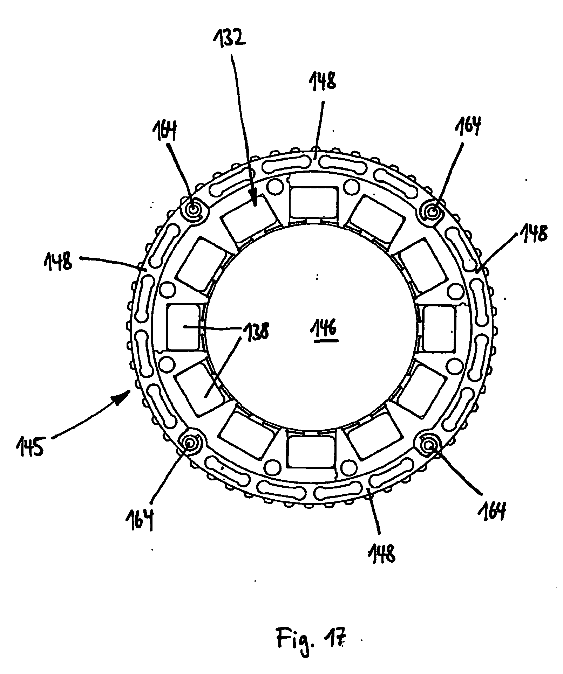

Die Fig. 16 und 17 zeigen die in den Fig. 14 und 15 dargestellte Anordnung, wobei in die durch die ineinander greifenden Verbindungselemente 150 und 152 definierten Durchgangsöffnungen 153 Spannstifte 164 eingesetzt sind. Das Einsetzen der Spannstifte 164 in die Durchgangsöffnungen 153 führt zu einer Verkleinerung des Innendurchmessers des in den Fig. 14 und 15 dargestellten Gehäuses 145, sodass die Gehäusesegmente 148 mit ihren Innenflächen radial gegen die Außenflächen Plattensegmentblöcke 134 verspannt werden. Der Innendurchmesser des verspannten Gehäuses 145 ist dabei geringfügig kleiner gewählt als der Außendurchmesser des Statorrings 132, so dass dieser kraft- und formschlüssig in dem Gehäuse 145 aufgenommen ist. Die in Fig. 15 angedeuteten Zwischenräume 162 werden mithin vollständig eliminiert, ohne dass der Statrorring 132 nachbearbeitet werden muss. Die Gehäusesegmente 148 stehen vielmehr in direktem Kontakt mit den Plattensegmentblöcken 134. Durch diesen engen Kontakt wird bei der späteren Anwendung des erfindungsgemäßen Stators 132 ein stets optimaler Wärmeübergang zwischen den Plattensegmentblöcken 134 und den Gehäusesegmenten 148 gewährleistet, sodass die in dem Rotor erzeugte Wärme problemlos über das Gehäuse 145 abgeführt werden kann.

Um der in den Fig. 16 und 17 dargestellten Anordnung zusätzliche Stabilität zu verleihen, kann der Stator 132 einem Kunststoffmaterial vergossen werden, wobei ein mittig in den Stator eingesetzter Dorn 146 und die Gehäusesegmente 148 als Schalung für den Gießvorgang dienen.

Man erkennt, dass ein Stator 32, 132 oder Rotor für eine elektrodynamische Maschine, insbesondere für einen Torquemotor 48 eine Vielzahl von teilringförmigen Plattensegmenten 10, 110 aufweist, die derart gestapelt sind, dass mehrere teilringförmige Plattensegmentblöcke 34, 134 gebildet werden, die zusammengesetzt den Stator 32, 132 oder Rotor bilden. Der Stator 32, 132 oder Rotor kann ein ringförmiges Gehäuse 145 aufweisen, wobei der Innendurchmesser des Gehäuses 145 bei der Montage des Stators 32 oder Rotors derart veränderbar ist, dass das Gehäuse 145 um die montierten Plattensegmentblöcke 134 positionierbar und radial dagegen verspannbar ist.

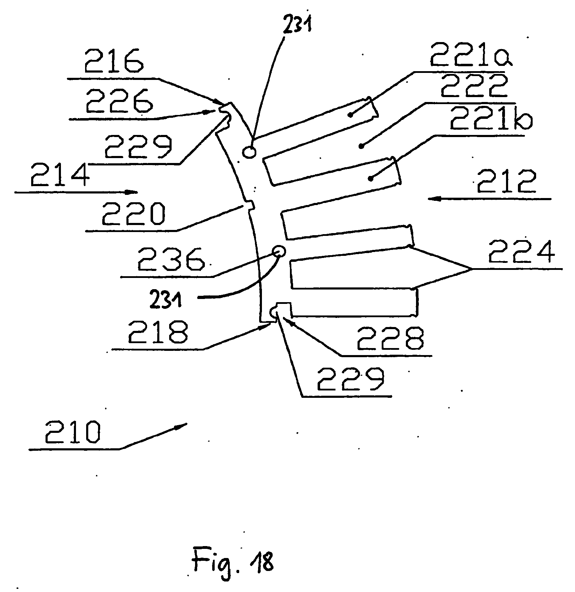

Fig. 18 zeigt eine Draufsicht eines Plattensegments 210 für einen Stator in einem Außenläufer-Motor gemäß einer weiteren Ausführungsform der vorliegenden Erfindung.

Bei dem Plattensegment 210 handelt es sich um ein ausgestanztes Blechteil mit einer Außenseite 212, einer Innenseite 214 und zwei einander gegenüberliegenden Stirnseiten 216 und 218, die gemeinsam eine teilringartige Form ausbilden. Die Innenseite 214 weist die Form eines im Wesentlichen glatten Teilkreisbogens auf, in dem an einer Stelle eine Einbuchtung 220 eingebracht ist, die einen Teil einer Verdrehsicherung bildet, welche nachfolgend noch näher erläutert wird.

Die Außenseite 212 umfasst Vorsprünge 221 a, 221 b, die im Wesentlichen rechteckig ausgebildet und abwechselnd nebeneinander angeordnet sind, wobei die Vorsprünge 221 a in der Breite etwas schmaler sind als die Vorsprünge 221 b. Zwischen zwei benachbarten Vorsprüngen 221 a, 221 b ist jeweils eine im Wesentlichen recheckige bis leicht keilförmige Aussparung 222 vorgesehen, welche die Vorsprünge 221a und 221b voneinander trennt. Ein Vorsprung 221b dient jeweils mit zwei benachbarten Aussparungen 222 zur Aufnahme einer Spulenanordnung 238, wie es unter Bezugnahme auf die Fig. 1 bis 3 bereits erläutert wurde, nur dass in dem vorliegenden Ausführungsbeispiel die Vorsprünge 221a, 221 b und die Spulen 238 nach außen gerichtet sind.

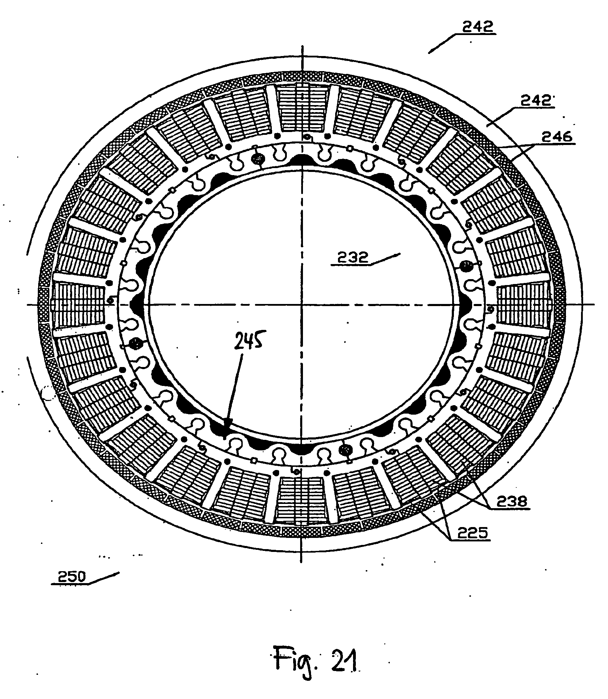

Jedes Vorsprung 221a, 221 b weist endseitig zwei seitliche Kerben 224 auf, wobei jeweils eine Kerbe 224 eines Vorsprungs 221a einer gegenüberliegenden Kerbe 224 eines Vorsprungs 221 b zugeordnet ist. Die einzelnen Kerben 224 bilden im montierten Zustand einer Vielzahl der in Fig. 18 dargestellten Plattensegmente 210 Nuten, in die (hier nicht gezeigte) Halteelemente 225 in Form länglicher Plattenelemente eingeschoben werden können (siehe dazu Fig. 21). Die Plattenelemente 225 dienen zur Sicherung der Spulenanordnungen 238, die auf die Vorsprünge 221 b der Plattensegmentblöcke 234 aufgesetzt werden, wie es genauer unter Bezugnahme auf Fig. 7 beschrieben wird.

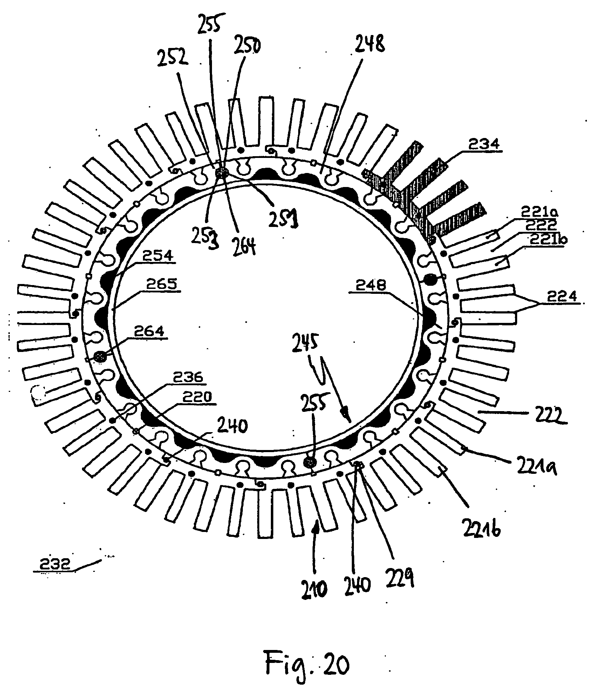

An der Stirnseite 216 des Plattensegments 210 ist ein L-förmiger Verbindungsabschnitt 226 ausgebildet, während an der gegenüberliegenden Stirnseite 218 ein dazu komplementärer Verbindungsabschnitt 228 vorhanden ist. Die Verbindungsabschnitte 226, 228 dienen dazu, benachbarte Plattensegmente 210 kraft- und formschlüssig miteinander zu verbinden und relativ zueinander auszurichten, wenn mehrere Plattensegmente 210 zur Bildung eines Plattensegmentrings nebeneinander angeordnet werden. Dabei bilden die Verbindungsabschnitte 226, 228 benachbarter Plattensegmente 210 - wie in Fig. 20 zu sehen - gemeinsam eine Durchgangsöffnung 229 zur Aufnahme eines (hier nicht gezeigten) Spannstiftes 240, wie es unter Bezugnahme auf Fig. 20, 21 noch genauer erläutert wird. Schließlich kann jedes Plattensegment 210 ein (hier nicht dargestelltes) Durchgangsloch aufweisen, das zur Aufnahme (hier ebenfalls nicht gezeigter) Schraubbolzen vorgesehen ist. Wenigstens zwei weitere Durchgangslöcher 231 dienen zur Aufnahme von Nietstiften 236, welche die Plattensegmente 210 miteinander verbinden und zueinander ausrichten.

Die einzelnen Plattensegmente 210 werden zu Plattensegmentblöcken 234 zusammengesetzt, indem mehrere der in Fig. 18 dargestellten Plattensegmente 210 kongruent übereinander positioniert werden. Dabei werden die Plattensegmente 210 mit ihren kreisrunden Durchgangslöchern zunächst auf die Positionierstifte geschoben, um die Plattensegmente 210 präzise zueinander ausrichten zu können. In die weiteren Durchgangslöcher 231 werden Nietstifte 236 eingesetzt und darin verpresst. Diese dienen dazu, die Plattensegmente 210 fest miteinander zu verbinden und zueinander auszurichten. Sobald die Plattensegmente 210 fest miteinander verbunden sind, werden die Positionierstifte entfernt. Die dadurch frei werdenden Durchgangslöcher können bei der Montage des Motors Schraubbolzen 54 aufnehmen, um weitere Anbauteile oder Gehäuseteile befestigen zu können.

Fig. 20 zeigt eine Stator-Anordnung 232, bei der zwölf Plattensegmentblöcke 234 zu einem geschlossenen Statorring 132 zusammengesetzt sind. Dabei greift jeweils ein Verbindungsabschnitt 226 eines Plattensegmentblockes 234 in den Verbindungsabschnitt 228 eines benachbart angeordneten Plattensegmentblockes 234 ein. In die Durchgangsöffnungen 229, wie sie von den jeweils benachbarten Verbindungsbereichen 226, 228 beim Zusammensetzen der Plattensegmentblöcke 234 gebildet werden, sind Spannstifte 240 eingesetzt, wodurch die Plattensegmentblöcke 234 kraftschlüssig gegeneinander verspannt und relativ zueinander ausgerichtet werden. Dazu sind die in den benachbarten Verbindungsabschnitten 226, 228 je zur Hälfte eingebrachten Durchgangsöffnungen 229 derart ausgebildet und relativ zueinander ausgerichtet, dass beim Einschieben der Spannstifte 240 jeweils benachbarte Plattensegmentblöcke 234 mit einer definierbaren Kraft gegeneinander gezogen werden, wobei sich die Verbindungsabschnitte 226, 228 jedes Plattensegments 10 formschlüssig ineinander fügen und die Innenseiten bzw. Innenflächen 214 der Plattensegmentblöcke 234 bündig und nahezu nahtlos ineinander übergehen.

Die vorgefertigten ringförmigen Spulenanordnungen 238 sind jeweils auf die nach außen gerichteten Vorsprünge 221b der Plattensegmente 210 bzw. der Plattensegmentblöcke 234 aufgesteckt, so dass sich die Spulenanordnungen 238 in den Aussparungen 222 erstrecken. Nach dem Aufschieben der Spulenanordnungen 238 werden die Halteelemente 225 in die Kerben der Vorsprünge 221a, 221b eingeschoben, um ein Abrutschen der Spulenanordnungen 238 von den Vorsprüngen 221 b zu verhindern.

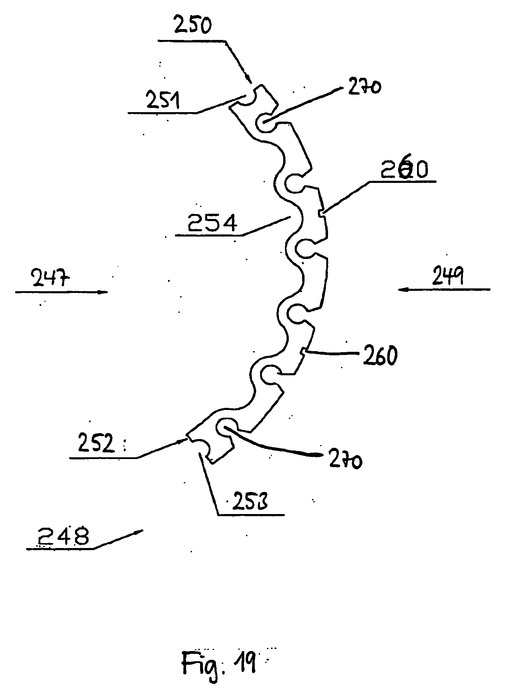

Fig. 19 ist eine Draufsicht eines Gehäusesegmentes 248, das zur Ausbildung eines Innengehäuses 245 für den in Fig. 12 gezeigten Statorring 132 dient.

Das Gehäusesegment 248 weist einen im Wesentlichen teilringförmigen Aufbau auf, der derart beschaffen ist, dass ein ringförmiges Gehäuse 245 erzeugt wird, wenn - wie in Fig. 20 gezeigt - mehrere der in Fig. 19 dargestellten Gehäusesegmente 248 nebeneinander angeordnet und gegeneinander verspannt werden. Dazu umfasst jedes Gehäusesegment 248 an seinem freien Ende 250 und 252 je eine Ausnehmung 251, 253, die derart ausgebildet sind, dass beim aneinanderfügen zweiter benachbarter Gehäusesegmente 248 jeweils eine Durchgangsöffnung 255 zur Aufnahme eines Spannstifts 264 entsteht.

In dem Ausführungsbeispiels von Fig. 20 sind insgesamt vier Gehäusesegmente 248 zu einem Ringgehäuse 245 zusammengesetzt, welches in die von den Plattensegmentblöcken 234 gebildeten Stator-Anordnung 232 eingeschoben ist. Dabei stehen sich die freien Enden 250, 252 der Gehäusesegmente 248 jeweils gegenüber, so dass dazwischen die Durchgangsöffnung 255 entsteht. Gleichzeitig liegen die Gehäusesegmente 248 derart locker in dem Statorring 232, dass zwischen dem Innenumfang der Plattensegmentblöcke 234 und dem Außenumfang der Gehäusesegmente 248 ein gewisses Spiel verbleibt. Erst wenn die Spannstifte 246 in die Durchgangsöffnungen 255 eingeschoben werden, vergrößert sich der Außendurchmesser des Gehäuses 245, wobei die Gehäusesegmente 248 von innen gegen die Plattensegmentblöcke 234 gepresst werden. Das Gehäuse 245 wird dadurch kraft- und formschlüssig innerhalb des Statorrings 232 fixiert.

Im Außenumfang 249 eines jeden Gehäusesegments 248 ist jeweils eine Vertiefung 260 eingebracht, die mit der Einbuchtung 220 eines benachbarten Plattensegments 210 bzw. eines benachbarten Plattensegmentblocks 234 als Verdrehsicherung zusammenwirkt. Zweckmäßig ist in die Vertiefungen 220, 260 ein Steg, eine Feder o.dgl. eingesetzt. Man kann die Vertiefung 260 aber auch als Erhebung ausbilde, die formschlüssig in die Einbuchtung 220 im Plattensegmentblock 234 eingreift.

Innerhalb eines Gehäusesegments 248 können ferner sich in Axialrichtung erstreckende Bohrungen 270 ausgebildet sein. Diese dienen beispielsweise zur Aufnahme von (nicht dargestellten) Schraubbolzen, um weitere Gehäuseteile oder Anbauteile am Motor zu befestigen. Am Innenumfang 247 des Gehäusesegments 248 sind parallel zur Axialrichtung und parallel zueinander mehrere wellenförmige Vertiefungen 254 ausgebildet. Diese können entweder als Kühlrippen oder - nach Einbringen eines Innenrings 256 in das Gehäuse 245 - als Kühlkanäle genutzt werden, indem ein Kühlmittel durch die axial liegenden Kanäle hindurchgeleitet wird.

Fig. 21 zeigt eine Schnittansicht eines Außenläufer-Motors mit einem Stator 232, der innen von einem Gehäuse 245 unterstützt wird, und mit einem außen liegenden Rotor 242, der an seinem Innenumfang Permanentmagnete 246 trägt.

Man erkennt, dass ein Stator 32, 232 oder Rotor für eine elektrodynamische Maschine, insbesondere für einen Torquemotor, als Innen- oder Außenläufer eine Vielzahl von teilringförmigen Plattensegmenten 10, 210 aufweist, die derart gestapelt sind, dass mehrere teilringförmige Plattensegmentblöcke 34, 234 gebildet werden. Diese bilden zu einem Ring zusammengesetzt den Stator 32, 232 oder Rotor, wobei jeweils benachbarte Plattensegmentblöcke 34, 234 mittels einer Spannvorrichtung gegeneinander verspannt werden. Die Spannvorrichtung ist bereits in den Plattensegmentblöcken 34, 234 integriert sein. Wird das Gehäuse 145 beispielsweise außen um den Stator 132 herum gelegt, so ist der Innendurchmesser des Gehäuses 145 bei der Montage des Stators 132 oder Rotors derart veränderbar, dass das Gehäuse 145 um die montierten Plattensegmentblöcke 34, 134 positionierbar und radial dagegen verspannbar ist.

## Patentansprüche

1. Stator (32, 232) oder Rotor für eine elektrodynamische Maschine, insbesondere Torquemotor (48), wobei der Stator (32, 232) oder Rotor eine Vielzahl von gestapelten teilringförmigen Plattensegmenten (10, 210) aufweist, und wobei die Plattensegmente (10, 210) derart gestapelt sind, dass mehrere teilringförmige Plattensegmentblöcke (34, 234) gebildet werden, die zusammengesetzt den Stator (32, 232) oder Rotor bilden, wobei
▪ die Plattensegmente (10, 210) Verbindungsabschnitte (26, 226, 28, 228) aufweisen, die derart ausgebildet sind, dass sie aneinander fixierbar sind und dass sie die teilringförmigen Plattensegmentblöcke (34, 234) bei ihrer Montage kraft- und/oder formschlüssig miteinander verbinden **dadurch gekennzeichnet,**
▪ dass die Verbindungsabschnitte (26, 226, 28, 228) derart ausgebildet sind, dass sie unter Verkleinerung eines Durchmessers und/oder einer Außenabmessung der miteinander verbundenen Plattensegmentblöcke (34, 234) aneinander fixierbar sind, wobei die Verbindungsabschnitte (26, 226, 28, 228) derart ausgebildet sind, dass sie unter Verringerung des Durchmessers und/oder der Außenabmessung der miteinander verbundenen Plattensegmentblöcke (34, 234) einen Spannstift (40, 240) zwischen sich aufnehmen.

2. Stator oder Rotor nach Anspruch 1, **dadurch gekennzeichnet, dass** die Plattensegmente (10, 210) derart ausgebildet sind, dass nach der Montage eines Plattensegmentblockes (34, 234) zumindest eine Spulenanordnung (38, 238) an dem Plattensegmentblock (34, 234) befestigbar ist.

3. Stator oder Rotor nach Anspruch 2, **dadurch gekennzeichnet, dass** die Plattensegmente (10, 210) zumindest einen Vorsprung (20a,b; 221a,b) aufweisen, an dem eine Spulenanordnung (38, 238) befestigbar ist, wobei der zumindest eine Vorsprung (20a,b; 221a,b) derart ausgebildet ist, dass die Spulenanordnung (38, 234) darauf aufsteckbar oder aufschiebbar ist.

4. Stator oder Rotor nach Anspruch 2 oder 3, **dadurch gekennzeichnet, dass** die Spulenanordnung (38, 238) ein vorgefertigtes Bauteil ist.

5. Stator oder Rotor nach einem der vorhergehenden Ansprüche, **dadurch gekennzeichnet, dass** die Plattensegmente (10, 210) Verbindungsabschnitte (26, 226, 28, 228) aufweisen, die derart ausgebildet sind, dass sie hakenartig oder spannringartig ineinander greifen.

6. Stator oder Rotor nach einem der vorhergehenden Ansprüche, **dadurch gekennzeichnet, dass** dieser ein ringförmiges Gehäuse (145, 245) aufweist, das an den Plattensegmentblöcken (234) festlegbar ist.

7. Stator oder Rotor nach Anspruch 6, **dadurch gekennzeichnet, dass** das Gehäuse (145, 245) derart ausgebildet ist, dass der Stator (232) oder Rotor mit dem Gehäuse (145, 245) verspannbar ist.

8. Stator oder Rotor nach Anspruch 6 oder 7, **dadurch gekennzeichnet, dass** das Gehäuse (145, 245) aus mehreren Gehäusesegmenten (148, 248) zusammengesetzt und spannringartig ausgebildet ist.

9. Stator nach einem der Ansprüche 6 bis 8, **dadurch gekennzeichnet, dass** zwischen dem Stator (232) und dem Gehäuse (145, 245) eine Verdrehsicherung (220) vorgesehen ist.

10. Verfahren zum Herstellen eines Stators nach einem der vorhergehenden Ansprüche, wobei das Verfahren die Schritte aufweist:
▪ Zusammensetzen der Plattensegmente (10, 210) zu teilringförmigen Plattensegmentblöcken (34, 234),
▪ Montieren von Spulenanordnungen (38, 238) an den Plattensegmentblöcken (34, 234),
▪ Zusammensetzen der die Spulenanordnungen (38, 238) aufweisenden teilringförmigen Plattensegmentblöcke (34, 234) zu einem Stator (32, 232), wobei die Plattensegmentblöcke (34, 234) untereinander verspannt werden.

11. Verfahren nach Anspruch 10, das ferner die Schritte aufweist:
▪ Positionieren des Gehäuses (145, 245) um die zusammengesetzten Plattensegmentblöcke (234) und
▪ Verspannen des Gehäuses (145, 245) gegen die Plattensegmentblöcke (34, 234).

12. Verfahren nach Anspruch 10 oder 11, **dadurch gekennzeichnet, dass** die Plattensegmentblöcke (34) in Kunststoff eingebettet werden.

13. Verfahren nach Anspruch 12, **dadurch gekennzeichnet, dass** zum Einbetten der Plattensegmentblöcke (34) in Kunststoff das Gehäuse (145) und/oder ein Dorn (146) als Gießform verwendet wird/werden.

14. Elektrodynamische Maschine mit einem Stator oder Rotor nach einem der Ansprüche 1 bis 9.

## Claims

1. Stator (32, 232) or rotor for an electrodynamic machine, particularly a torque motor (48), wherein the stator (32, 232) or rotor features a plurality of stacked partially ring-shaped plate segments (10, 210), and wherein the plate segments (10, 210) are stacked in such a way that several partially ring-shaped segment blocks (34,234) are formed which together form the stator (32, 232) or rotor, wherein
• the plate segments (10, 210) feature connecting portions (26, 226, 28, 228) which are formed in such a way that they can be fixed to each other and that they connect the partially ring-formed plate segments upon their assembly in a frictionally-locked and/or form-locking manner with each other, **characterised in that**
• the connecting portions (26, 226, 28, 228) are formed in such a way that, when there is a reduction in a diameter and/or an external dimension of the plate segment blocks (34, 234) connected with each other, they can be fixed to each other, whereby the connecting portions (26, 226, 28, 228) are formed in such a way that, when there is a reduction in the diameter and/or the external dimension of the plate segment blocks (34, 234) they take up a clamping pin (40, 240) between them.

2. Stator or rotor according to claim 1, **characterised in that** the plate segments (10, 210) are formed in such a way that after the assembly of a plate segment block (34, 234), at least one coil arrangement (38, 238) can be fixed to the plate segment block (34, 234).

3. Stator or rotor according to claim 2, **characterised in that** the plate segments (10, 210) comprise at least one projection (20a, b, 221 a, b) on which a coil arrangement (38, 238) can be fixed, wherein the at least one projection (20a, b, 221 a, b) is formed in such a way that the coil arrangement (38, 234) can be plugged or pushed onto it.

4. Stator or rotor according to claims 2 or 3, **characterised in that** the coil arrangement (38, 238) is a prefabricated component.

5. Stator or rotor according to one of the previous claims, **characterised in that** the plate segments (10, 210) comprise connecting portions (26, 226, 28, 228) which are formed in such a way that they interlink in a hook-like or clamping ring-like manner.

6. Stator or rotor according to one of the previous claims, **characterised in that** it comprises a ring-shaped housing (145, 245) which can be fixed to the plate segment blocks (234).

7. Stator or rotor according to claim 6, **characterised in that** the housing (145, 245) is formed in such a way that the stator (232) or rotor can be braced with the housing (145, 245).

8. Stator or rotor according to claims 6 or 7, **characterised in that** the housing (145, 245) is composed of several housing segments (148,248) and is formed in the shape of a clamping ring.

9. Stator according to claims 6 to 8, **characterised in that** between the stator (232) and the housing (145, 245) an anti-twist device (220) is provided.

10. Method for the manufacture of a stator according to one of the previous claims, wherein the method comprises the following steps:
• assembly of the plate segments (10, 210) into partially ring-shaped plate segment blocks (34, 234),
• mounting of coil arrangements (38, 238) on the plate segment blocks (34, 234),
• assembly of the partially ring-shaped segment blocks (34, 234) comprising the coil arrangements (38, 238) into a stator (32, 232), wherein the plate segment blocks (34, 234) can be braced against each other.

11. Method according to claim 10 further comprising the steps:
• positioning of the housing (145, 245) around the assembled plate segment blocks (234), and
• bracing of the housing (145, 245) against the plate segment blocks (34, 234).

12. Method according to claims 10 or 11, **characterised in that** the plate segment blocks (34) are embedded in plastic.

13. Method according to claim 12, **characterised in that** for the embedding of the plate segment blocks (34) in plastic, the housing (145) and/or a mandrel (146) are used as a casting mould.

14. Electrodynamic machine with a stator or rotor according to one of the claims 1 to 9.

## Revendications

1. Stator (32, 232) ou rotor pour un moteur électrodynamique, notamment pour un moteur couple (48),
le stator (32, 232) ou le rotor comportant plusieurs segments de plaque (10, 210) empilés, en forme d'anneaux partiels, et les segments de plaque (10, 210) étant empilés de manière à former plusieurs blocs de segments de plaque (34, 234) qui sont en forme d'anneaux partiels et qui forment ensemble le stator (32, 232) ou le rotor,
les segments de plaque (10, 210) comportant des tronçons de liaison (26, 226, 28, 228) qui sont conçus de telle sorte qu'ils peuvent être fixés les uns aux autres et que, lors de leur montage, ils assemblent les uns aux autres, par force et/ou par concordance de forme, les blocs de segments de plaque (34, 234) en forme d'anneaux partiels,
**caractérisé en ce que** les tronçons de liaison (26, 226, 28, 228) sont conçus de telle sorte qu'ils peuvent être fixés les uns aux autres par la réduction d'un diamètre et/ou d'une dimension extérieure des blocs de segments de plaque (34, 234) assemblés, les tronçons de liaison (26, 226, 28, 228) étant conçus de telle sorte qu'ils logent entre eux une goupille de serrage (40, 240) par la réduction du diamètre et/ou de la dimension extérieure des blocs de segments de plaque (34, 234) assemblés.

2. Stator ou rotor selon la revendication 1, **caractérisé en ce que** les segments de plaque (10, 210) sont conçus de telle sorte que, après le montage d'un bloc de segments de plaque (34, 234), au moins un dispositif de bobine (38, 238) peut être fixé au bloc de segments de plaque (34, 234).

3. Stator ou rotor selon la revendication 2, **caractérisé en ce que** les segments de plaque (10, 210) comportent au moins une partie en saillie (20a,b; 221a,b) sur laquelle un dispositif de bobine (38, 238) peut être fixé, l'au moins une partie en saillie (20a,b; 221a,b) étant conçue de telle sorte que le dispositif de bobine (38, 234) peut être glissé ou poussé dessus.

4. Stator ou rotor selon la revendication 2 ou 3, **caractérisé en ce que** le dispositif de bobine (38, 238) est une pièce préfabriquée.

5. Stator ou rotor selon l'une des revendications précédentes, **caractérisé en ce que** les segments de plaque (10, 210) comportent des tronçons de liaison (26, 226, 28, 228) qui sont conçus de telle sorte qu'ils se saisissent l'un l'autre à la manière de crochets ou d'anneaux de serrage.

6. Stator ou rotor selon l'une des revendications précédentes, **caractérisé en ce qu'**il comporte un boîtier annulaire (145, 245) qui peut être fixé sur les blocs de segments de plaque (234).

7. Stator ou rotor selon la revendication 6, **caractérisé en ce que** le boîtier (145, 245) est conçu de telle sorte que le stator (232) ou le rotor peut être serré avec le boîtier (145, 245).

8. Stator ou rotor selon la revendication 6 ou 7, **caractérisé en ce que** le boîtier (145, 245) est composé de plusieurs segments de boîtier (148, 248) et est conçu à la manière d'un anneau de serrage.

9. Stator selon l'une des revendications 6 à 8, **caractérisé en ce qu'**une sécurité (220) contre la torsion est prévue entre le stator (232) et le boîtier (145, 245).

10. Procédé de fabrication d'un stator selon l'une des revendications précédentes, le procédé comportant les étapes suivantes :
- assemblage des segments de plaque (10, 210) en blocs de segments de plaque (34, 234) en forme d'anneaux partiels,
- montage de dispositifs de bobines (38, 238) sur les blocs de segments de plaque (34, 234),
- assemblage des blocs de segments de plaque (34, 234) en forme d'anneaux partiels, comportant les dispositifs de bobine (38, 238), en un stator (32, 232), les blocs de segments de plaque (34, 234) étant serrés les uns avec les autres.

11. Procédé selon la revendication 10, qui comporte aussi les étapes suivantes :
- positionnement du boîtier (145, 245) autour des blocs de segments de plaque (234) assemblés,
- serrage du boîtier (145, 245) contre les blocs de segments de plaque (34, 234).

12. Procédé selon la revendication 10 ou 11, **caractérisé en ce que** les blocs de segments de plaque (34) sont noyés dans du plastique.

13. Procédé selon la revendication 12, **caractérisé en ce que**, pour noyer les blocs de segments de plaque (34) dans du plastique, le boîtier (145) et/ou un mandrin (146) sont utilisés comme moule.

14. Moteur électrodynamique avec un stator ou un rotor selon l'une des revendications 1 à 9.
